# EUROPEAN PATENT APPLICATION

(11) **EP 4 517 120 A1**
(43) Date of publication of application: **05.03.2025**
(21) Application number: 23795840.0
(22) Date of filing: 06.02.2023
(51) Int. Cl.: F16C 19/06, F16C 33/41, H02K 5/173

(54) **BALL BEARING**

(30) Priority: 27.04.2022 JP 2022072960
(71) Applicant: Minebea Mitsumi Inc., Kitasaku-gun, Nagano 3890293 (JP)
(72) Inventor: TOMIUCHI, Takahiro, Kitasaku-gun, Nagano 389-0293 (JP); KOMIYAMA, Hiroshi, Kitasaku-gun, Nagano 389-0293 (JP); IIZUKA, Osamu, Kitasaku-gun, Nagano 389-0293 (JP); WATANABE, Kazuki, Kitasaku-gun, Nagano 389-0293 (JP); KATO, Shogo, Kitasaku-gun, Nagano 389-0293 (JP)
(74) Representative: Plasseraud IP
(86) International application number: PCT/JP2023/003697
(87) International publication number: WO 2023/210092

(57) **Abstract**

[Problem] To reduce contact of a retainer with an outer ring and inner ring of a ball bearing even when centrifugal force due to high-speed rotation of the ball bearing acts on the retainer and the retainer deforms. [Solution] A ball bearing 10 comprising an inner ring 30 having a raceway groove 31, an outer ring 20 having a raceway groove 21, a plurality of balls 40 disposed between the raceway grooves 21, 31, and a crown-type retainer 50 inserted between the balls 40. The retainer 50 includes an annular base 51, a pair of supports 52 extending in the axial direction from the base 51, and a plurality of pockets 53 which are formed along the circumferential direction and into which the balls 40 are fitted between the supports 52. The retainer 50 is provided with a tapered surface 54 that comes into contact with the inner ring 30 and that, at the corner of the base 51 on the inner peripheral surface side, gradually increases in inner diameter along the axial direction.

## Description

### Technical Field

The present invention relates to a ball bearing fitted with a crown-shaped retainer.

### Background Art

A ball bearing is typically configured such that a plurality of balls are held by a retainer between an inner ring and an outer ring.

A crown-shaped retainer integrally molded of resin has been used. In the crown-shaped retainer, pairs of pillar portions are disposed on an upper surface of an annular base portion at constant intervals in a circumferential direction, and a pocket for holding a ball is formed between the pair of pillar portions. An advantage of using the crown-shaped retainer is that it can be manufactured at low cost by injection molding and can be assembled simply by inserting the retainer between the outer ring and the inner ring (see, for example, Patent Document 1).

### Citation List

### Patent Literature

Patent Document 1: JP 2017-75683 A

### Summary of Invention

### Technical Problem

When a dmn value (a product of a pitch circle diameter (mm) and a rotation speed (rpm)) of the ball bearing is increased to exceed, for example, 17 × 10⁵, centrifugal force accompanying the rotation of the ball bearing is increased in the crown-shaped retainer, and the retainer expands in a radial direction. As a result, the retainer comes into contact with the outer ring and the inner ring of the ball bearing, and wear occurs to shorten the service life.

The present invention has been made in view of the above circumstances, and an object thereof is to provide a ball bearing capable of reducing contact of a retainer with an outer ring and an inner ring of the ball bearing even when centrifugal force due to high-speed rotation of the ball bearing acts on the retainer and the retainer is deformed.

### Solution to Problem

An embodiment of the present invention is a ball bearing including an inner ring including a raceway groove, an outer ring including a raceway groove, a plurality of balls disposed between the raceway grooves, and a retainer having a crown shape to be inserted between the balls. The retainer includes a base portion having an annular shape, a pair of pillar portions extending from the base portion in an axial direction, and a plurality of pockets formed along a circumferential direction. The balls are fitted between the pillar portions. The retainer comes into contact with the inner ring. A thickness-reduced portion is provided at a corner portion at an inner peripheral surface side of the base portion.

### Advantageous Effects of Invention

An embodiment of the present invention can reduce, even when centrifugal force due to high-speed rotation of the ball bearing acts on the retainer and the retainer is deformed, contact of the retainer with the outer ring and the inner ring of the ball bearing.

### Brief Description of Drawings

In FIG. 1, (A) is a cross-sectional view illustrating a ball bearing according to an embodiment of the present invention. (B) is a cross-sectional view illustrating a modification example of (A).
FIG. 2 is a plan view illustrating the ball bearing according to the embodiment of the present invention.
FIG. 3 is a perspective view illustrating a retainer according to the embodiment of the present invention.
In FIG. 4, (A) is a developed view illustrating the retainer according to the embodiment of the present invention. (B) is a cross-sectional view taken along line B-B of (A).
FIG. 5 is a cross-sectional view illustrating a motor according to an embodiment of the present invention.
FIG. 6 is a cross-sectional view illustrating a motor according to another embodiment of the present invention.
FIG. 7 is a perspective view illustrating a modification example of the embodiment of the present invention.
FIG. 8 is a cross-sectional view for illustrating an angle β in a circumferential direction formed by a row of balls in an embodiment of the present invention.

### Description of Embodiments

### 1. Configuration of Ball Bearing

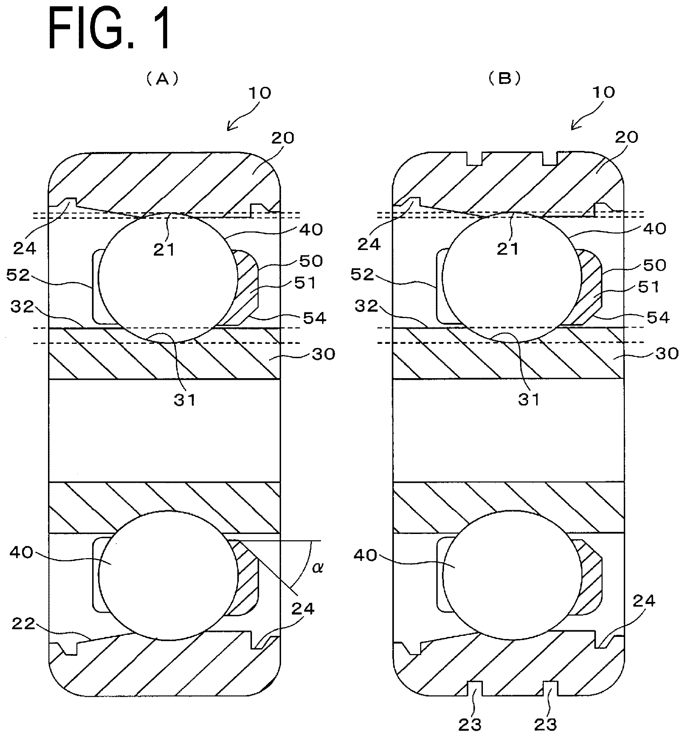

FIG. 1 is a cross-sectional view illustrating a ball bearing 10 according to an embodiment of the present invention. The ball bearing 10 shown in this drawing is configured such that balls 40 are held at equal intervals by a retainer 50 between a raceway groove 21 of an outer ring 20 and a raceway groove 31 of an inner ring 30.

The outer ring 20, the inner ring 30, and the balls 40 are made of materials such as martensitic stainless steels (SUS440C, and the like), high-carbon bearing steels (SUJ2, SAE52100, and the like), or ceramics (Si₃N₄, SiC, Al₂O₃, and the like), and surface hardness is increased to HRC58 or higher by heat treatment. The retainer 50 is formed of a synthetic resin by injection molding or machining such as cutting. Here, for the purpose of reducing the centrifugal force of the ball 40, it is preferable that the material constituting the ball 40 is ceramics.

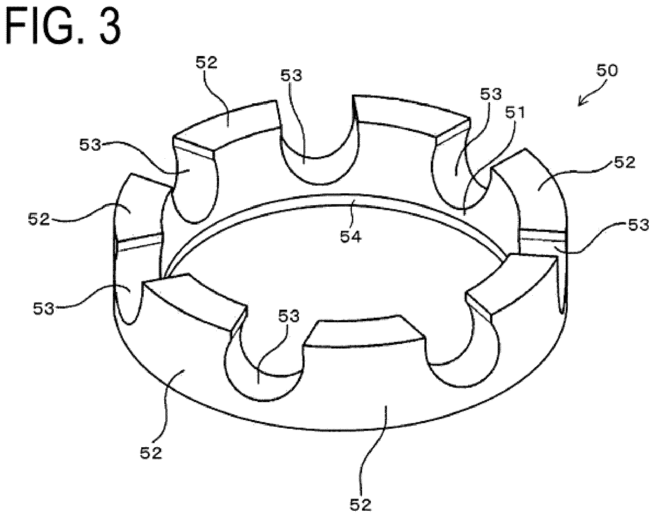

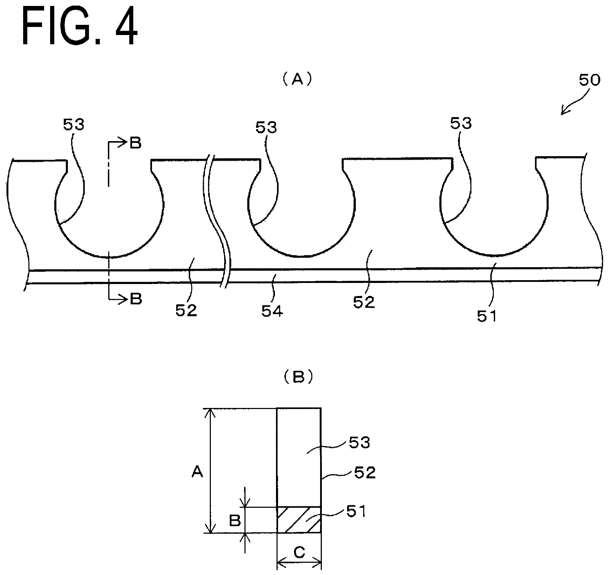

As shown in FIGS. 3 and 4, the retainer 50 is a synthetic resin crown-shaped retainer. This retainer includes a base portion 51 having an annular shape and a plurality of pockets 53 formed along a circumferential direction between a pair of pillar portions 52 extending axially upward from the base portion 51. The balls 40 are fitted between the pair of pillar portions 52. An inner periphery of the pocket 53 forms a cylindrical curved surface or a spherical surface having a diameter slightly larger than an outer diameter of the ball 40. A tapered surface (thickness-reduced portion) 54 having an inner diameter gradually increasing toward an axial direction is formed at a corner portion at an inner peripheral surface side of the retainer 50. Such a retainer 50 is disposed so as to come into contact with an outer peripheral surface 32 of the inner ring 30. The outer peripheral surface 32 of the inner ring 30 is preferably a cylindrical curved surface parallel to a rotation axis over an entire region in the axial direction excluding the raceway groove 31 and end portions in the axial direction. With such a configuration, a contact area between the retainer 50 and the outer peripheral surface 32 of the inner ring 30 is secured, and local wear of the retainer 50 can be suppressed. It is preferable that there is no step portion of the outer peripheral surface 32. The step portion causes significant wear of the retainer 50 when the retainer 50 is deformed so as to be opened by centrifugal force.

Due to the tapered surface 54, when the pillar portions 52 of the retainer 50 expand radially outward due to high-speed rotation of the ball bearing 10, end portions of the pillar portions 52 move toward the outer ring 20 side, while the base portion 51 serving as roots of the pillar portions 52 moves toward the inner ring 30 side. In this case, the corner portion of the base portion 51 may come into contact with the outer peripheral surface of the inner ring 30, but the base portion 51 is formed with the tapered surface 54, thus making the contact area small even when the contact is made. The tapered surface 54 and the outer peripheral surface of the inner ring 30 form a portion having a wedge-shaped cross section, and the lubricant is held in the portion by capillary action. Instead of the tapered surface 54, an R-shape having an arc-shaped cross section may be used. A boundary portion between the tapered surface 54 and an inner peripheral surface of the base portion 51 may have an R-shape having an arc-shaped cross section. In this case, when the pillar portions 52 of the retainer 50 expand radially outward due to high-speed rotation of the ball bearing 10, a portion of the retainer 50 coming into contact with the outer peripheral surface of the inner ring 30 has an R-shape or a flat surface, making it possible to further reduce wear of the retainer 50.

If an angle α of the tapered surface 54 with respect to the axial direction is too large, the rigidity of the retainer 50 is impaired, and therefore the angle α is set to be less than 45°. The angle α of the tapered surface 54 is preferably less than 30° and more preferably less than 15°.

A tapered surface 22 having an inner diameter gradually increasing from an axial end portion of the raceway groove 21 toward the axial direction is formed on an inner peripheral surface of the outer ring 20 at an axial end portion side of the pillar portion 52. Even when the pillar portions 52 of the retainer 50 are deformed to open due to centrifugal force, the tapered surface 22 reduces contact of the pillar portions 52 with the inner peripheral surface of the outer ring 20.

An annular groove 24 is formed in the vicinity of an opening portion of the inner peripheral surface of the outer ring 20. An edge portion of a seal member is fitted into the groove 24.

As the synthetic resin constituting the retainer 50, polyamide (nylon 66, nylon 46, PA9T, PA10T, and the like), polyacetal, or the like can be used, but polyetherketone-based resin such as polyetheretherketone (PEEK) is favorably used because of its high strength. Those thermoplastic resins reinforced with glass fibers or carbon fibers can be used. Such a synthetic resin is favorably molded into the retainer 50 by injection molding suitable for mass production.

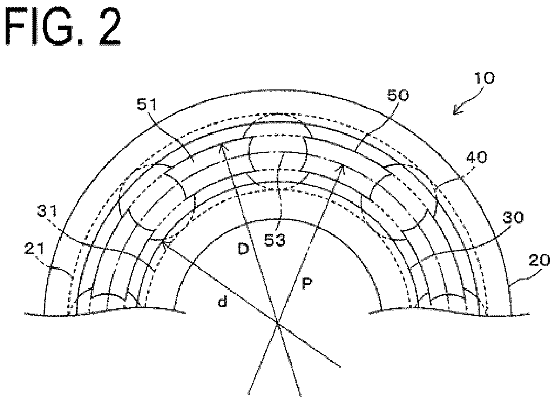

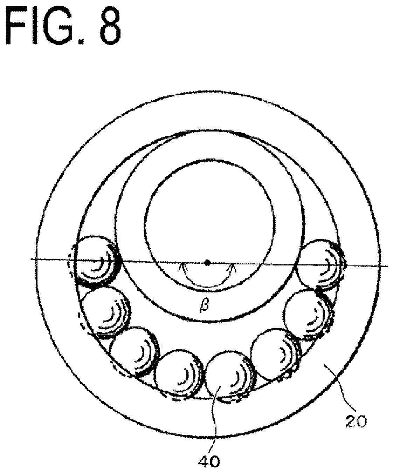

In the ball bearing 10 of the present embodiment, in order to suppress deformation of the retainer 50 due to centrifugal force accompanying high-speed rotation, the following dimensional ratios of the respective portions are set as a preferable aspect (see FIG. 4B).
i) A ratio of an axial thickness B of the base portion 51 to an axial length A of the retainer 50 is equal to or greater than 20%, and a ratio of the axial thickness B to a radial thickness C of the base portion 51 is equal to or greater than 52%. Setting in this way makes the base portion 51 relatively long and reduces deformation due to the centrifugal force. The ratio of the thickness B to the length A is preferably 22% or greater, and the ratio of the thickness B to the thickness C is preferably 60% or greater.
ii) A ratio of a radial thickness of the retainer 50 to the axial length A of the retainer 50 ranges from 30% to 40%. Setting in this way causes the retainer 50 to be thinned in the radial direction, the pillar portion 52 to be reduced in weight, and can reduce deformation due to the centrifugal force. Since sufficient strength cannot be obtained if the retainer 50 is too thin, the lower limit of the ratio of the thickness C to the length A is set to 30%. The ratio of the thickness C to the length A preferably ranges from 30% to 37.5%.
iii) A difference between an inner diameter D of the outer ring 20 and an outer diameter d of the inner ring 30 is defined as a raceway groove-to-raceway groove distance (see FIG. 2), a ratio of the radial thickness C of the retainer 50 to the raceway groove-to-raceway groove distance is 50% or greater and less than 65%. Setting in this way causes the retainer 50 to be thinned in the radial direction, the pillar portion 52 to be reduced in weight, and can reduce the circle diameter due to the centrifugal force. The ratio of the thickness C to the raceway groove-to-raceway groove distance is preferably 50% or greater and less than 62%.
iv) When a half of a difference between an outer diameter of the outer ring 20 and an inner diameter of the inner ring 30 is defined as a radial thickness of the ball bearing 10, a ratio of a diameter of the ball 40 to the radial thickness of the ball bearing 10 is 40% or greater and less than 50%, and a ratio of the diameter of the ball 40 to the outer diameter of the outer ring 20 is 10% or greater and less than 20%. Setting in this way makes the size of the ball 40 small with respect to the size of the ball bearing 10 and reduces the centrifugal force of the ball 40. This makes it possible to reduce wear of the raceway groove 21 of the outer ring 20. The ratio of the diameter of the ball 40 to the radial thickness of the ball bearing 10 is preferably 40% or greater and less than 45%. The number of balls 40 can be increased by reducing the size of the balls 40.
v) In an axial view when the balls 40 incorporated between the outer ring 20 and the inner ring 30 as shown in FIG. 8 are arranged continuous in the circumferential direction without a gap, an angle β (incorporation angle) between the balls 40 sides formed by a straight line passing through a center axis of the outer ring 20 and a center of a ball 40 at one end of a row of the balls 40 and a straight line passing through the center axis of the outer ring 20 and a center of a ball 40 at the other end of the row of the balls 40 ranges from 185° to 195°. By setting the incorporation angle large in this way, the number of balls 40 can be increased and the diameter of the balls 40 can be reduced. Thus, a pitch circle diameter P is reduced, the centrifugal force of the balls 40 is reduced, and the centrifugal force acting on the retainer 50 is reduced. When the incorporation angle ranges from 185° to 195°, a width in the circumferential direction of the pillar portion 52 of the retainer 50 is inevitably reduced, and the pillar portion is reduced in weight, resulting in further reduction in the centrifugal force. The incorporation angle β preferably ranges from 185° to 190°.
vi) As shown in FIG. 1, a radial depth of the raceway groove 31 of the inner ring 30 is greater than a radial depth of the raceway groove 21 of the outer ring 20 (see FIG. 1). Setting in this way allows the balls 40 to be disposed at the inner side in the radial direction and the centrifugal force of the balls 40 to be reduced.
vii) A groove curvature ratio of the diameter of the ball 40 to a radius of curvature of cross sections of the raceway grooves 21 and 31 of the outer ring 20 and the inner ring 30 is 53% or greater. Setting in this way reduces the contact between the ball 40 and the raceway grooves 21 and 31 and can reduce the friction therebetween. When the depth of the raceway groove 31 of the inner ring 30 is made deeper than the depth of the raceway groove 21 of the outer ring 20, the groove curvature ratio of the cross section of the raceway groove 31 of the inner ring 30 is made larger than the groove curvature ratio of the cross section of the raceway groove 21 of the outer ring 20 so as to reduce the contact between the ball 40 and the raceway groove 31.

### 2. Configuration of Motor

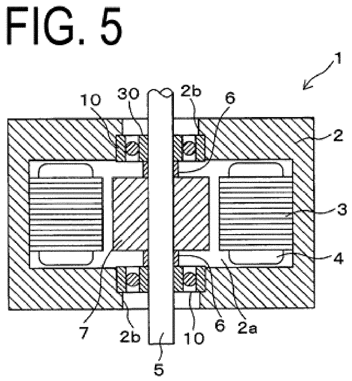

A motor 1 mounted with the ball bearing 10 having the above-described configuration will be described with reference to FIG. 5.

The motor 1 includes a housing 2. The housing 2 includes therein a space 2a having a circular axial cross section, and a stator core 3 is fixed to an inner peripheral surface of the space 2a. The stator core 3 is formed by layering, in the axial direction, a plurality of thin sheet-like soft magnetic materials (for example, electromagnetic steel sheets) having an annular shape, and includes a plurality of pole teeth protruding outward in the radial direction. The plurality of pole teeth are provided at equal intervals along a circumferential direction, and a coil 4 is wound around each pole teeth.

Opening portions 2b are formed in both end surfaces of the housing 2, and the ball bearings 10 having the above-described configuration are fixed to the opening portions 2b with an adhesive. A shaft 5 is fixed to the inner rings 30 of the ball bearings 10 by an adhesive, so that the shaft 5 is rotatably supported by the ball bearings 10.

A rotor magnet (rotor core) 7 is fixed to an intermediate portion of the shaft 5 between the ball bearings 10 via a spacer 6 by a means such as press-fitting or adhesion. The rotor magnet 7 faces the pole teeth of the stator core 3 with a gap and is magnetized in a manner such that adjacent portions alternately have opposing magnetic poles such as S-N-S-N... along a circumferential direction. Supplying the coil 4 with a drive current generates a driving force rotating the rotor magnet 7, thereby rotating the shaft 5 with respect to the housing 2. A rotary body such as a dryer is connected to a distal end portion of the shaft 5.

### 3. Effect

In the motor 1 having the above-described configuration, since the shaft 5 is rotatably supported by the ball bearing 10 and the retainer 50 is in contact with the inner ring 30, the centrifugal force acting on the retainer 50 can be reduced. In addition, the retainer 50 is less likely to come into contact with the outer ring 20 when expanding radially outward due to high-speed rotation. On the other hand, since the tapered surface having an inner diameter gradually increasing toward the axial direction is provided at the corner portion at the inner peripheral surface side of the base portion 51 of the retainer 50, the contact area of the retainer 50 with the inner ring 30 is small. When the pillar portions 52 of the retainer 50 are inclined radially outward and the base portion 51 is moved inward, the contact area between the base portion 51 and the inner ring 30 is kept small. Thus, wear of the retainer 50 can be suppressed.

Accordingly, the motor 1 having the above-described configuration allows for rotation with a dmn value of 17 × 10⁵ to 21 × 10⁵.

### Examples

As a result of performing a durability test on the ball bearing 10 of the embodiment having the above-described dmn value, the test could be continued for 1000 hours or longer. In contrast, as a result of performing a durability test on a ball bearing not having the above-described characteristics, the test was stopped after about 200 hours.

### 4. Modification Examples

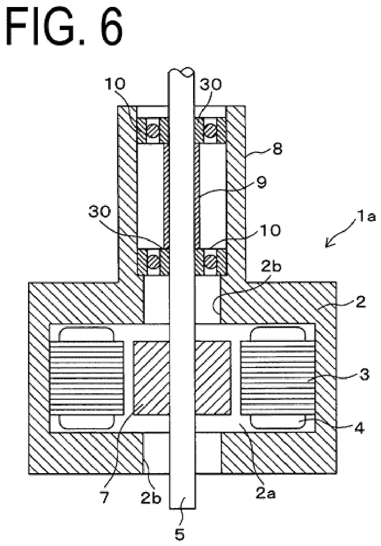

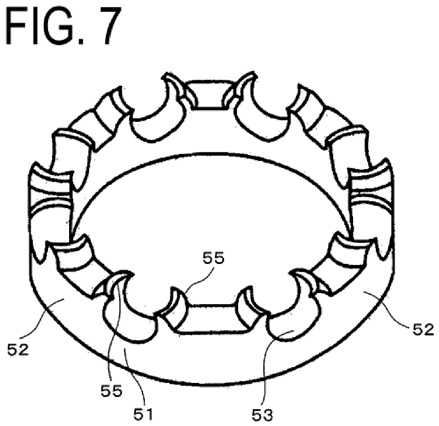

The present invention is not limited to the embodiment described above, and it is possible to make various modifications as described below.
i) As shown in FIG. 7, holding claws 55 can be formed at both end portions of the pillar portion 52. The holding claws 55 extend from the end portions of the adjacent pillar portions 52 toward the upper side in the axial direction and toward each other. The pocket 53 in this case is a spherical curved surface. In this example as well, all of the various numerical limitations described above apply.
ii) As shown in FIG. 1B, an annular groove 23 may be formed in the outer periphery of the outer ring 20, and an O-ring may be mounted in the annular groove 23.
iii) Although the motor shown in FIG. 5 is an example of the rotor magnet 7 supported at both ends between the ball bearings 10, the rotor magnet 7 may be supported in a cantilever manner by the ball bearings 10 as shown in FIG. 6. In a motor 1a shown in FIG. 6, a casing 8 for accommodating the ball bearings 10 is provided on an end surface of the housing 2. Although the casing 8 is formed integrally with the housing 2, the casing and the housing may be formed separately and fixed to each other by a means such as bonding. The casing 8 has a cylindrical shape, and one of the ball bearings 10 is fixed to a lower end portion of an inner peripheral surface 8a of the casing by a means such as bonding. A spacer 9 is in contact with the inner ring 30 of the ball bearing 10, and the other ball bearing 10 is fixed to the inner peripheral surface 8a in a state where the inner ring 30 is in contact with an upper end surface of the spacer 9. Thus, even in the motor 1a with the rotor magnet 7 supported in a cantilever manner, it is possible to obtain the action and effect equivalent to those of the motor 1.

### Industrial Applicability

The ball bearing of the present invention can be suitably used by being incorporated into various high-speed rotating devices such as motors and electric tools used in household vacuum cleaners and dryers, fan motors, and dental handpieces, and head actuators of hard disk drive devices swinging at high speed.

### Reference Signs List

1, 1a: motor, 2: housing, 2a: space, 2b: opening portion, 3: stator core, 4: coil, 5: shaft, 6: spacer, 7: rotor magnet (rotor core), 8: casing, 8a: inner peripheral surface, 9: spacer, 10: ball bearing, 20: outer ring, 21: raceway groove, 22: tapered surface, 23: annular groove, 24: groove, 30: inner ring, 31: raceway groove, 32: outer peripheral surface, 40: ball, 50: retainer, 51: base portion, 52: pillar portion, 53: pocket, 54: tapered surface (thickness-reduced portion), 55: holding claw, α: angle, A: axial length, B: axial thickness, C: radial thickness, d: outer diameter of inner ring, D: inner diameter of outer ring, P: pitch circle diameter.

## Claims

1. A ball bearing, comprising:
an inner ring including a raceway groove;
an outer ring including a raceway groove;
a plurality of balls disposed between the raceway grooves; and
a retainer having a crown shape to be inserted between the balls, wherein
the retainer comprises a base portion having an annular shape, a pair of pillar portions extending from the base portion in an axial direction, and a plurality of pockets formed along a circumferential direction, the balls being fitted between the pillar portions,
the retainer comes into contact with the inner ring, and
a thickness-reduced portion having an inner diameter gradually increasing toward the axial direction is provided at a corner portion at an inner peripheral surface side of the base portion.

2. The ball bearing according to claim 1, wherein
the thickness-reduced portion is a tapered surface, and
an angle formed by the tapered surface with respect to the axial direction is less than 45°.

3. The ball bearing according to claim 2, wherein
the thickness-reduced portion is a tapered surface, and
an angle formed by the tapered surface with respect to the axial direction is less than 30°.

4. The ball bearing according to claim 3, wherein
the thickness-reduced portion is a tapered surface, and
an angle formed by the tapered surface with respect to the axial direction is less than 15°.

5. The ball bearing according to any one of claims 1 to 4, wherein
a ratio of an axial thickness of the base portion to an axial length of the retainer is 20% or greater, and
a ratio of the axial thickness to a radial thickness of the base portion is 52% or greater.

6. The ball bearing according to any one of claims 1 to 5, wherein a ratio of a radial thickness of the base portion to an axial length of the retainer ranges from 30% to 40%.

7. The ball bearing according to any one of claims 1 to 6, wherein
a difference between an inner diameter of the outer ring and an outer diameter of the inner ring is defined as a raceway groove-to-raceway groove distance, and
a ratio of a radial thickness of the retainer to the raceway groove-to-raceway groove distance is 50% or greater and less than 65%.

8. The ball bearing according to any one of claims 1 to 7, wherein
a half of a difference between an outer diameter of the outer ring and an inner diameter of the inner ring is defined as a radial thickness of a bearing,
a ratio of a diameter of the ball to the radial thickness of the bearing is 40% or greater and less than 50%, and
a ratio of the diameter of the ball to the outer diameter of the outer ring is 10% or greater and less than 20%.

9. The ball bearing according to claim 8, wherein in an axial view when the balls incorporated between the outer ring and the inner ring are arranged continuous in the circumferential direction without a gap, an angle in the circumferential direction between sides of the balls formed by a straight line passing through a center axis of the outer ring and a center of a ball at one end of a row of the balls and a straight line passing through the center axis of the outer ring and a center of a ball at the other end of the row of the balls ranges from 185° to 195°.

10. The ball bearing according to any one of claims 1 to 9, wherein a radial depth of the raceway groove of the inner ring is larger than a radial depth of the raceway groove of the outer ring.

11. The ball bearing according to any one of claims 1 to 10, wherein an entire circumference of an outer peripheral surface of the inner ring excluding the raceway groove is a cylindrical curved surface parallel to the axial direction.

12. The ball bearing according to any one of claims 1 to 11, wherein
a groove curvature ratio of a diameter of the balls to a radius of curvature of cross sections of the raceway grooves of the outer ring and the inner ring is 53% or greater, and
the groove curvature ratio of the cross section of the raceway groove of the inner ring is larger than the groove curvature ratio of the cross section of the raceway groove of the outer ring.

13. The ball bearing according to any one of claims 1 to 12, wherein a tapered surface having an inner diameter gradually increasing from an axial end portion of the raceway groove toward the axial direction is provided on an inner peripheral surface of the outer ring at an axial end portion side of the pillar portion.

14. The ball bearing according to any one of claims 1 to 13, wherein a dmn value ranges from 17 × 10⁵ to 21 × 10⁵.

15. A motor, comprising:
a shaft rotatably provided via a ball bearing described in any one of claims 1 to 14; and
a rotor core fixed to the shaft.
